# EUROPEAN PATENT APPLICATION

(11) **EP 4 821 736 A1**
(43) Date of publication of application: **14.10.2026**
(21) Application number: 26161820.1
(22) Date of filing: 03.03.2026
(51) Int. Cl.: B60K 35/28, G06V 20/56, B60K 35/29, B60K 35/81, B60W 30/18, G01C 21/36, G08G 1/16

(54) **DISPLAY CONTROL DEVICE**

(30) Priority: 11.04.2025 JP 2025065601
(71) Applicant: Toyota Jidosha Kabushiki Kaisha, Toyota-shi, Aichi-ken 471-8571 (JP)
(72) Inventor: MINAMI, Takayuki, Tokyo, 103-0022 (JP)
(74) Representative: D Young & Co LLP

(57) **Abstract**

A display control device displays a lane marking image and a host vehicle icon on a display. The display control device includes a travel control unit configured to control travel of a host vehicle, a determination unit configured to determine whether or not the host vehicle is returning to an original travel lane after deviating from the original travel lane, and a display control unit configured to display the lane marking image and the host vehicle icon. When it is determined that the host vehicle is returning to the original travel lane after deviating from the original travel lane, the display control unit moves the host vehicle icon relative to the lane marking image with a position of the lane marking image fixed.

## Description

### CROSS-REFERENCE TO RELATED APPLICATIONS

This application is based upon and claims the benefit of priority from Japanese Patent Application No. 2025-065601, filed on April 11, 2025, the entire contents of which are incorporated herein by reference.

### TECHNICAL FIELD

The present disclosure relates to a display control device configured to control display of a display mounted on a host vehicle.

### BACKGROUND

For example, Japanese Unexamined Patent Publication No. 2019-182305 describes a device including a travel control unit configured to automatically control travel of a host vehicle based on a target trajectory. In this device, an image indicating the target trajectory and an image indicating a road on which the host vehicle travels are superimposed and displayed on a display screen.

### SUMMARY

For example, a travel control unit configured to control travel of a host vehicle may perform control of moving the host vehicle from an original travel lane to an adjacent lane in order to avoid an obstacle ahead (such as a stopped vehicle or the like), and then returning to the original travel lane again. In this case, for example, it is conceivable to move a lane marking image relative to a host vehicle icon while displaying the host vehicle icon at a reference position on the display screen. When the display position of the lane marking image is changed in the display screen in this manner, a range in which the display moves in the display screen becomes large, and the driver may be attracted to the display screen.

Accordingly, the present disclosure describes a display control device capable of displaying a state of movement of a host vehicle while suppressing attraction of the driver when the host vehicle deviates from an original travel lane and then returns to the original travel lane again.

A display control device according to one aspect of the present disclosure is [1] "a display control device configured to display, on a display, a lane marking image corresponding to a lane marking around a host vehicle and a host vehicle icon corresponding to the host vehicle, the display control device comprising: a travel control unit configured to control travel of the host vehicle based on an external environment and a preset travel route; a determination unit configured to determine, based on scheduled control information of travel of the host vehicle according to the travel control unit, whether or not the host vehicle is returning to an original travel lane after deviating from the original travel lane; and a display control unit configured to display the lane marking image and the host vehicle icon on the display so as to correspond to a positional relationship between the lane marking and the host vehicle, wherein when it is determined by the determination unit that the host vehicle is returning to the original travel lane after deviating from the original travel lane, the display control unit moves the host vehicle icon relative to the lane marking image with a position of the lane marking image fixed in a display screen of the display during a period from when control of deviating from the original travel lane is started until when the host vehicle is returning to the original travel lane".

For example, the host vehicle may return to the original travel lane after deviating from the original travel lane in order to avoid an obstacle or the like. In this case, the display control device moves the host vehicle icon relative to the lane marking image with the position of the lane marking image fixed in the display screen of the display during the period from when the control of deviating from the original travel lane is started until when the host vehicle is returning to the original travel lane. That is, in this case, the host vehicle icon moves with the lane marking image as a reference. Here, in the display screen of the display, the lane marking image is displayed around the host vehicle icon and is displayed larger than the host vehicle icon. Therefore, this display control device can curb the driver being attracted to the display by fixing the lane marking image occupying a wide range in the display screen and moving the host vehicle icon smaller than the lane marking image. In this manner, when the host vehicle deviates from the original travel lane and then returns to the original travel lane again, the display control device can display the state of movement of the host vehicle while suppressing attraction of the driver.

The above display control device may be [2] "the display control device according to the above [1], wherein when moving the host vehicle icon, the display control unit moves a position in a lane-width direction with an orientation fixed so that the host vehicle icon faces forward". In this case, since the display control device does not change the orientation of the host vehicle icon, attraction of the driver to the display can be further suppressed.

The above display control device may be [3] "the display control device according to the above [1] or [2], wherein when the host vehicle does not return to the original travel lane even after a predetermined return time threshold has elapsed after moving the host vehicle icon relative to the lane marking image with the position of the lane marking image fixed in the display screen of the display, the display control unit gradually moves the host vehicle icon to a reference position in the display screen, and then displays the lane marking image relative to the host vehicle icon with a position of the host vehicle icon fixed in the display screen". For example, a schedule of returning to the original travel lane after the host vehicle deviates from the original travel lane may be changed due to a change in a situation of other vehicles around the host vehicle or the like. Therefore, when the host vehicle does not return to the original travel lane even after the predetermined return time threshold has elapsed, the display control device gradually moves the host vehicle icon to the reference position in the display screen. Then, the display control device displays the lane marking image relative to the host vehicle icon with the position of the host vehicle icon fixed in the display screen. Thereby, even when the travel schedule of the host vehicle is changed, the display control device can switch control of display of the host vehicle icon and the lane marking image in accordance with the change in the travel schedule.

The above display control device may be [4] "the display control device according to the above [3], wherein the return time threshold is set to be shorter when a speed of the host vehicle is fast than when the speed of the host vehicle is slow". In this case, the display control device can more appropriately switch the control of display of the host vehicle icon and the lane marking image according to the speed of the host vehicle.

The above display control device may be [5] "the display control device according to any one of the above [1] to [4], wherein when control of travel of the host vehicle according to the travel control unit is canceled by an override operation of a driver of the host vehicle, the display control unit stops control of moving the host vehicle icon relative to the lane marking image with the position of the lane marking image fixed in the display screen of the display, and displays the lane marking image and the host vehicle icon on the display so as to correspond to the positional relationship between the lane marking and the host vehicle". For example, when the control of travel of the host vehicle according to the travel control unit is canceled by the override operation of the driver, an initial schedule of returning to the original travel lane after deviating from the original travel lane may be changed. Therefore, when the control by the travel control unit is canceled, the display control device stops the control of moving the host vehicle icon relative to the lane marking image with the position of the lane marking image fixed, which had been performed assuming that the host vehicle is returning to the original travel lane after deviating from the original travel lane. Thereby, the display control device can switch the control of display of the host vehicle icon and the lane marking image in accordance with the change in the travel schedule.

The above display control device may be [6] "the display control device according to the above [5], wherein the display control unit stops the control of moving the host vehicle icon relative to the lane marking image with the position of the lane marking image fixed in the display screen of the display earlier as a steering angle of a steering operation that is the override operation of the driver of the host vehicle deviates more greatly from a steering angle of a steering operation by the travel control unit, and displays the lane marking image and the host vehicle icon on the display so as to correspond to the positional relationship between the lane marking and the host vehicle". For example, in a state where the travel control unit is performing control of travel of the host vehicle, the larger a steering amount (steering angle) of the override operation performed by the driver becomes, the higher the possibility that the initial schedule of returning to the original travel lane after deviating from the original travel lane is changed is considered to be. Therefore, during control of travel by the travel control unit, the larger the steering amount of the override operation performed by the driver becomes, the earlier the display control device stops the control of moving the host vehicle icon relative to the lane marking image with the position of the lane marking image fixed, which had been performed assuming that the host vehicle is returning to the original travel lane after deviating from the original travel lane. Thereby, the display control device can switch the control of display of the host vehicle icon and the lane marking image while reflecting the intention of the driver.

According to one aspect of the present disclosure, when the host vehicle deviates from an original travel lane and then returns to the original travel lane again, it is possible to display a state of movement of the host vehicle while suppressing attraction of a driver.

### BRIEF DESCRIPTION OF THE DRAWINGS

FIG. 1 is a block diagram showing an example of a display control device according to an embodiment.
FIGS. 2A to 2C are diagrams showing a display image example of a lane marking image and a host vehicle icon displayed on a display.
FIGS. 3A and 3B are diagrams showing a display image example of a lane marking image and a host vehicle icon displayed on a display.
FIG. 4 is a flowchart showing a flow of display processing of a lane marking image and a host vehicle icon performed in the display control device.

### DETAILED DESCRIPTION

Hereinafter, an exemplary embodiment will be described with reference to the drawings. In each drawing, the same or corresponding elements are denoted by the same reference numerals, and overlapping description is omitted.

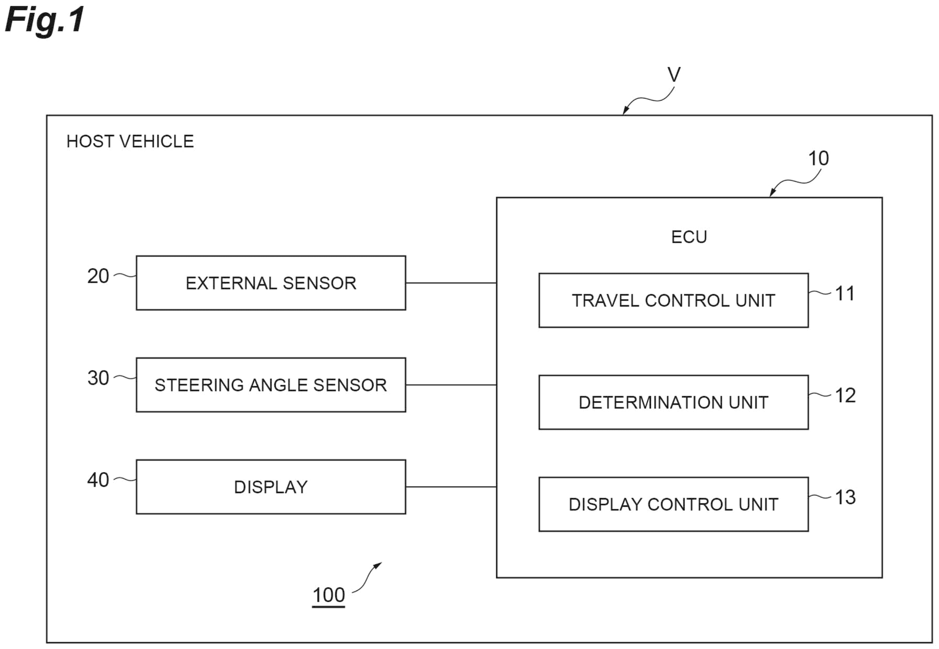

As shown in FIG. 1, a display control device 100 is mounted on a host vehicle V. The display control device 100 displays, on a display 40, a lane marking image corresponding to a lane marking of a travel lane around the host vehicle V and a host vehicle icon corresponding to the host vehicle V. In the present embodiment, the display control device 100 displays, on the display 40, a lane marking image corresponding to a lane marking of a travel lane ahead of the host vehicle V as the vicinity of the host vehicle V. However, the display control device 100 may display, on the display 40, a lane marking image corresponding to a lane marking of a travel lane existing in a direction other than ahead (for example, rearward) of the host vehicle V as the vicinity of the host vehicle V.

The display control device 100 includes an ECU [Electronic Control Unit] 10 configured to comprehensively manage the device. The ECU 10 is an electronic control unit having a CPU [Central Processing Unit] and a storage unit. The storage unit is configured of, for example, a ROM [Read Only Memory], a RAM [Random Access Memory], an EEPROM [Electrically Erasable Programmable Read-Only Memory], and the like. In the ECU 10, various functions are realized by, for example, executing a program stored in the storage unit by the CPU. The ECU 10 may be configured of a plurality of electronic control units.

An external sensor 20, a steering angle sensor 30, and the display 40 are connected to the ECU 10. These devices connected to the ECU 10 are mounted on the host vehicle V.

The external sensor 20 is an on-vehicle sensor configured to detect an external environment of the host vehicle V. The external sensor 20 includes at least a camera or a radar sensor. The camera is an imaging device configured to capture an image of the external environment of the host vehicle V. The camera is provided, for example, on a rear side of a windshield of the host vehicle V, and captures an image of a front of the vehicle. The camera transmits imaging information about the external environment of the host vehicle V to the ECU 10. The camera may be a monocular camera or a stereo camera. A plurality of cameras may be provided, and in addition to the front of the host vehicle V, the left side, the right side, and the like may be imaged.

The radar sensor is a detection device configured to detect an object around the host vehicle V by using radio waves (for example, millimeter waves) or light. The radar sensor includes a lidar [LIDAR: Light Detection and Ranging]. The lidar detects a target by transmitting light to the vicinity of the host vehicle V and receiving light reflected by an object. The radar sensor transmits information about the detected external environment of the host vehicle V to the ECU 10.

The steering angle sensor 30 detects a steering angle of a steering operation of the host vehicle V by the driver. The steering angle sensor 30 may detect, for example, a rotation angle of a steering shaft connected to a steering wheel. The steering angle sensor 30 transmits information about the detected steering angle to the ECU 10.

The display 40 is a display device configured to present information visually to the driver of the host vehicle V. The display 40 is provided in a vehicle interior of the host vehicle V. The display 40 may be a center display, may be an MID [Multi Information Display], or may be an HUD [Head Up Display]. The type and installation position of the display 40 are not limited as long as information can be presented visually. The display 40 displays various types of information according to a control signal of the ECU 10.

The ECU 10 functionally includes a travel control unit 11, a determination unit 12, and a display control unit 13.

The travel control unit 11 controls travel of the host vehicle V based on the external environment of the host vehicle V detected by the external sensor 20 and a preset travel route. The travel control unit 11 performs control of automatically causing the host vehicle V to travel along the preset travel route while considering the external environment. The travel control unit 11 can perform control of automatically causing the host vehicle V to travel by using various well-known methods. The control of travel of the host vehicle V performed by the travel control unit 11 includes control of causing the host vehicle V to travel so as to return to the original travel lane after deviating from the original travel lane in order to avoid an obstacle when the obstacle exists on the travel lane on which the host vehicle V travels. Deviating from the original travel lane includes the host vehicle V completely deviating from the original travel lane and a part of the host vehicle V protruding from the original travel lane.

The travel lane is not limited to being provided with a lane marking. For example, the travel lane can be determined even in a place where the lane marking of the travel lane is partially interrupted in an intersection, such as when passing through the intersection. The original travel lane may be determined based on a travel trajectory to be traveled in a situation where there is no obstacle to be avoided, in a case where the lane marking is partially interrupted, such as in an intersection.

The travel control unit 11 generates scheduled control information for causing the host vehicle V to travel along the preset travel route while considering the external environment. The scheduled control information is generated, for example, based on the current external environment. The scheduled control information may be generated for only a predetermined time or a predetermined travel distance from the current time. The scheduled control information can change due to a change in the external environment. This scheduled control information includes at least information about a travel route (travel lane) for returning to the original travel lane after the host vehicle V deviates from the original travel lane in order to avoid an obstacle or the like in a situation such as avoiding an obstacle.

Further, when an override operation (manual intervention operation) is performed by the driver of the host vehicle V during control of travel of the host vehicle V, the travel control unit 11 stops the control of travel of the host vehicle V. That is, when the override operation is performed by the driver during control of travel of the host vehicle V by the travel control unit 11, the control of travel by the travel control unit 11 is switched to a driving operation by the driver.

The determination unit 12 determines whether or not the host vehicle V is returning to the original travel lane after deviating from the original travel lane, based on the scheduled control information of travel of the host vehicle V by the travel control unit 11 (the scheduled control information generated by the travel control unit 11).

The display control unit 13 displays the lane marking image and the host vehicle icon on the display 40 so as to correspond to the positional relationship between the lane marking around the host vehicle V and the host vehicle V. The host vehicle icon is an image corresponding to the host vehicle V and is predetermined. The lane marking image is an image of a lane marking around the host vehicle V. When displaying the lane marking image corresponding to the lane marking around the host vehicle V, the display control unit 13 may display the lane marking image around the host vehicle V based on information about the lane marking (position, shape, and the like of the lane marking) included in map information and the position of the host vehicle V. Further, the display control unit 13 may generate a lane marking image based on the lane marking detected by the external sensor 20 and display the generated lane marking image. The display control unit 13 may display the lane marking image by combining a method of using information about the lane marking included in the map information and the like with a method of using a detection result of the lane marking by the external sensor 20.

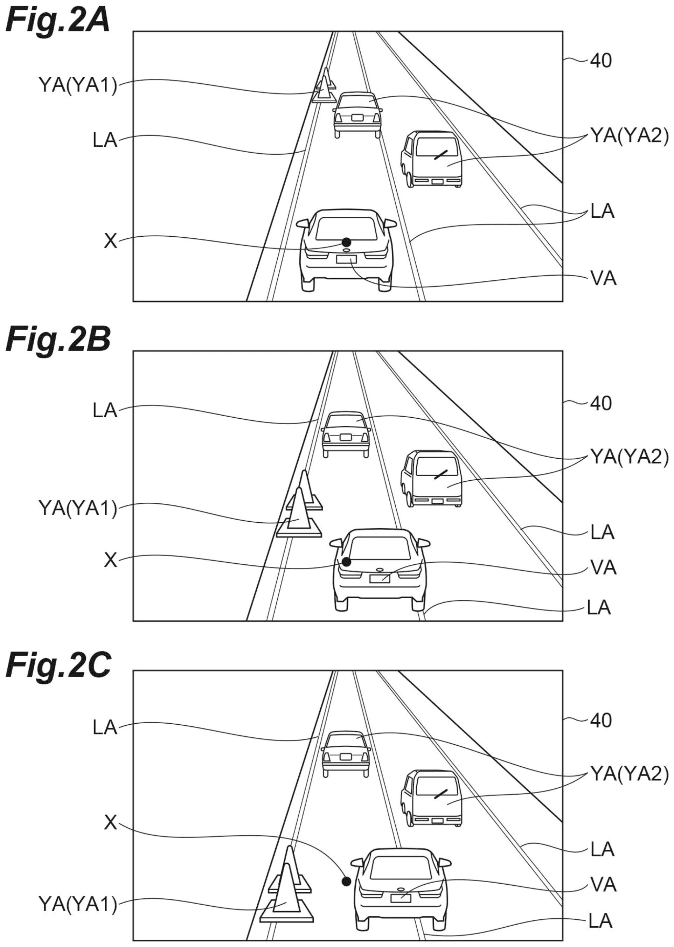

Here, as shown in FIG. 2A, the display control unit 13 displays, on the display 40, a host vehicle icon VA corresponding to the host vehicle V and a lane marking image LA corresponding to a lane marking around the host vehicle V. The example shown in FIG. 2A shows a state in which the front side of the host vehicle V is viewed from a position rearward and above the host vehicle V.

Further, during normal times, the display control unit 13 displays the host vehicle icon VA at a predetermined reference position X in the display screen of the display 40. Further, the display control unit 13 fixes the host vehicle icon VA at the position of the reference position X in the display screen of the display 40, and displays the lane marking image LA relative to the host vehicle icon VA so as to correspond to the positional relationship (position and orientation) between the host vehicle V and the surrounding lane marking. The reference position X can be set, for example, at a position at a center in a lateral direction and at a lower part in the display screen of the display 40.

During normal times, the display control unit 13 displays the host vehicle icon VA at the position of the reference position X in the display screen of the display 40 and keeps the orientation of the host vehicle icon VA fixed. For example, the display control unit 13 displays the orientation of the host vehicle icon VA upward in the display screen of the display 40. That is, during normal times, the display control unit 13 displays the lane marking image LA around the host vehicle icon VA with the orientation of the host vehicle icon VA as a reference. Therefore, when the orientation of the host vehicle V that actually travels changes, correspondingly, the position and orientation of the lane marking image LA relative to the host vehicle icon VA change with the orientation of the host vehicle icon VA fixed.

Further, when an obstacle is detected around the host vehicle V by the external sensor 20, the display control unit 13 displays an obstacle icon YA corresponding to the detected obstacle on the display 40. This obstacle includes vehicles (other vehicles) traveling around the host vehicle V, other parked or stopped vehicles, movable installations such as road cones (road sign cones) and construction guide signs installed on the road, and the like. The obstacle icon YA may be a predetermined image corresponding to the detected obstacle, or may be an image of the obstacle generated based on the detection result of the external sensor 20.

During normal times, similarly to the case of displaying the lane marking image LA, the display control unit 13 displays the obstacle icon YA around the host vehicle icon VA with the orientation of the host vehicle icon VA as a reference. That is, when the orientation of the host vehicle V that actually travels changes, correspondingly, the position and orientation of the obstacle icon YA relative to the host vehicle icon VA change with the orientation of the host vehicle icon VA fixed.

Here, as described above, the determination unit 12 determines whether or not the host vehicle V is returning to the original travel lane after deviating from the original travel lane, based on the scheduled control information of travel of the host vehicle V by the travel control unit 11. Then, there is a case where the determination unit 12 determines that the host vehicle V is returning to the original travel lane after deviating from the original travel lane. In this case, the display control unit 13 performs control of display different from the display during the above-described normal times. Hereinafter, the display different from the display during the above-described normal times is referred to as "display during exceptional times". Here, as the display during exceptional times, the display control unit 13 moves the host vehicle icon VA relative to the lane marking image LA with the position of the lane marking image LA fixed in the display screen of the display 40 during the period from when the control of deviating from the original travel lane is started until when the host vehicle V returns to the original travel lane.

Specifically, for example, there is a case where a road cone as an obstacle exists on a travel lane of the host vehicle V. Then, in order for the host vehicle V to travel while avoiding this road cone, the host vehicle V may temporarily deviate to the right side from the original travel lane (a part of the host vehicle V protrudes from the original travel lane), and after passing the road cone, move to the left side and return to the original travel lane. As described above, the control of travel of the host vehicle V for avoiding this road cone is performed by the travel control unit 11. In such a case, the determination unit 12 determines that the host vehicle V is returning to the original travel lane after deviating from the original travel lane, based on the scheduled control information of travel of the host vehicle V by the travel control unit 11.

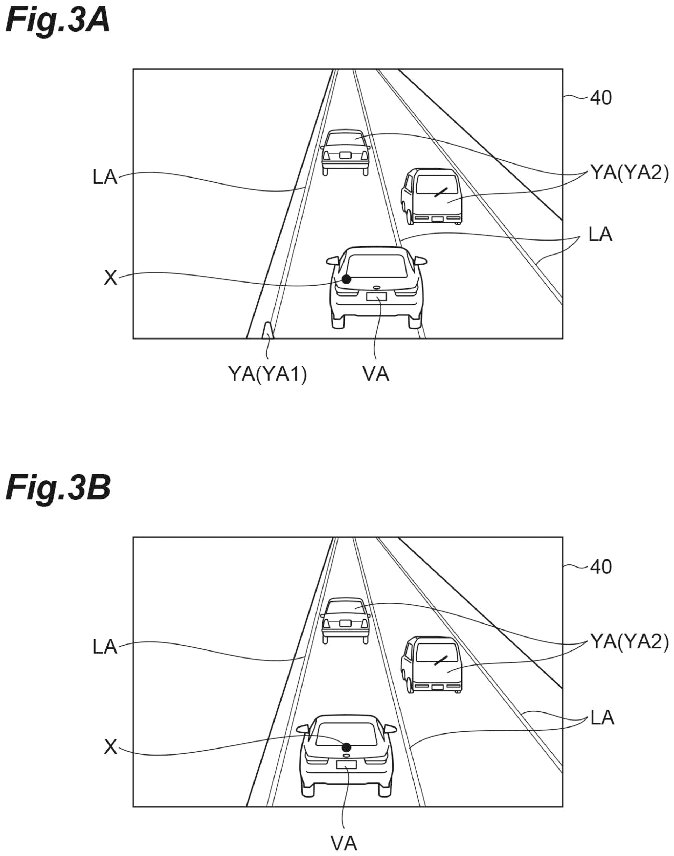

In this case, the display control unit 13 performs the display during exceptional times shown in FIG. 2B, FIG. 2C, and FIG. 3A from the display during normal times in which the host vehicle icon VA is displayed at the reference position X as shown in FIG. 2A and the lane marking image LA is displayed with the host vehicle icon VA as a reference. In FIG. 2A and the like, an obstacle icon YA1 is displayed as the obstacle icon YA corresponding to a road cone existing ahead of the host vehicle V, and an obstacle icon YA2 is displayed as the obstacle icon YA corresponding to another vehicle existing around the front of the host vehicle V. Further, as the host vehicle V travels while avoiding the road cone, the display form changes in the order of FIG. 2A, FIG. 2B, FIG. 2C, FIG. 3A, and FIG. 3B.

Here, when performing the display during exceptional times from the display during normal times shown in FIG. 2A, the display control unit 13 moves the host vehicle icon VA in the rightward direction relative to the lane marking image LA with the position of the lane marking image LA fixed, as shown in FIG. 2B and FIG. 2C. Then, as shown in FIG. 3A and FIG. 3B, the display control unit 13 moves the host vehicle icon VA in the leftward direction relative to the lane marking image LA with the position of the lane marking image LA fixed, and displays the host vehicle icon VA in the original travel lane. That is, the host vehicle icon VA returns to the reference position X again after deviating from the reference position X.

When moving the host vehicle icon VA to perform the display during exceptional times, the display control unit 13 moves the position of the host vehicle icon VA in the lane-width direction with the orientation fixed so that the host vehicle icon VA faces forward. Here, as an example, the position of the host vehicle icon VA is moved in the left-right direction (lane-width direction) with the orientation of the host vehicle icon VA fixed upward in the display screen of the display 40.

In this manner, the display control unit 13 switches between the display during normal times in which the lane marking image LA and the like are displayed with the host vehicle icon VA as a reference and the display during exceptional times in which the host vehicle icon VA is displayed with the lane marking image LA as a reference, based on the determination result of the determination unit 12.

Here, for example, there is a case where the actual host vehicle V does not return to the original travel lane even after a predetermined return time threshold has elapsed after moving the host vehicle icon VA relative to the lane marking image LA with the position of the lane marking image LA fixed in the display screen of the display 40. That is, this is a case where the actual host vehicle V does not return to the original travel lane after the display control unit 13 performs the display during exceptional times from the display during normal times. This is, for example, a case where although the travel control unit 11 initially planned to perform control of travel of returning the host vehicle V to the original travel lane after deviating from the original travel lane, control of not returning to the original travel lane is performed based on a change in the position of another vehicle in the surroundings or the like. In this manner, the travel schedule information generated by the travel control unit 11 may change. Therefore, the determination unit 12 sequentially confirms the travel schedule information generated by the travel control unit 11 and determines whether or not to return to the original travel lane.

When the host vehicle V does not return to the original travel lane even after the return time threshold has elapsed after starting the display during exceptional times, the display control unit 13 switches from the display during exceptional times to the display during normal times. Here, the display control unit 13 gradually moves the host vehicle icon VA to the reference position X in the display screen of the display 40, and then performs the display during normal times in which the lane marking image LA and the like are displayed relative to the host vehicle icon VA with the position of the host vehicle icon VA fixed in the display screen.

The display control unit 13 may set the "return time threshold" used for the determination to be shorter when the speed of the host vehicle V is fast than when the speed of the host vehicle V is slow. For example, the display control unit 13 can acquire, as the speed of the host vehicle V, a speed sensor capable of detecting information about the rotation speed of tires of the host vehicle V, a target control speed of the host vehicle V when the travel control unit 11 controls travel of the host vehicle V, or the like.

Further, the control of travel of the host vehicle V by the travel control unit 11 may be canceled by the override operation of the driver of the host vehicle V. That is, this is a case where the control of travel of the host vehicle V by the travel control unit 11 is stopped and switched to the driving operation of the driver after the display control unit 13 switches from the display during normal times to the display during exceptional times. In this case, the display control unit 13 stops the control of the display during exceptional times of moving the host vehicle icon VA relative to the lane marking image LA with the position of the lane marking image LA fixed in the display screen of the display 40. Then, the display control unit 13 displays the lane marking image LA and the host vehicle icon VA on the display 40 so as to correspond to the positional relationship between the lane marking of the travel lane around the host vehicle V and the host vehicle V. That is, when the override operation of the driver is performed in a case of performing the display during exceptional times, the display control unit 13 switches to the control of the display during normal times.

For example, when the operation amount of the override operation by the driver is large, there is a case where the driver considers to switch to the driving operation by the driver himself/herself more quickly than when the operation amount of the override operation is small. Therefore, the larger the steering angle of the steering operation that is the override operation of the driver deviates from the steering angle of the steering operation by the travel control unit 11, the earlier the display control unit 13 stops the control of moving the host vehicle icon VA relative to the lane marking image LA with the position of the lane marking image LA fixed in the display screen of the display 40. That is, the larger the operation amount (steering angle) of the override operation by the driver deviates from the steering angle of the steering operation by the travel control unit 11, the more quickly the display control unit 13 switches from the display during exceptional times to the display during normal times.

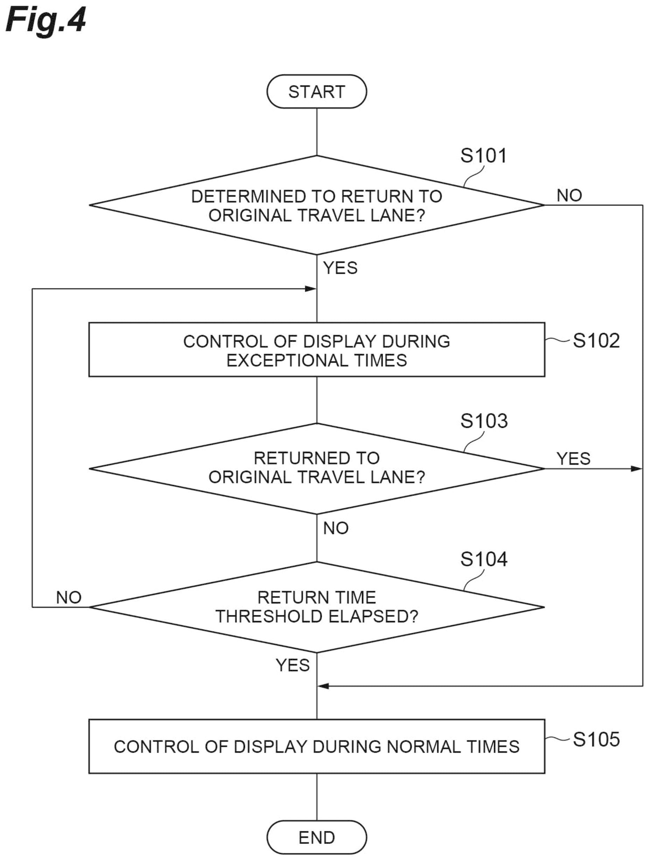

Next, a flow of display processing of the lane marking image LA and the host vehicle icon VA performed in the display control device 100 will be described. The processing shown in FIG. 4 is started, for example, together with the start of control of travel of the host vehicle V by the travel control unit 11. Further, the processing shown in FIG. 4 is started from the start after a predetermined time has elapsed after the processing reaches the end.

As shown in FIG. 4, the determination unit 12 determines whether or not the host vehicle V is returning to the original travel lane after deviating from the original travel lane, based on the scheduled control information generated by the travel control unit 11 (S101). For example, when it is not determined that the host vehicle V is returning to the original travel lane after deviating from the original travel lane (S101: NO), such as when the host vehicle V performs lane change by control of travel of the travel control unit 11 or when the host vehicle V does not deviate from the original travel lane (when lane change is not performed for a predetermined time), the display control unit 13 performs control of display during normal times (S105).

When it is determined that the host vehicle V is returning to the original travel lane after deviating from the original travel lane (S101: YES), the display control unit 13 performs control of display during exceptional times in which the host vehicle icon VA is displayed with the lane marking image LA as a reference (S102). Next, the display control unit 13 determines whether or not the host vehicle V has returned (returned) to the original travel lane, based on the scheduled control information of the host vehicle V generated by the travel control unit 11 (S103). When the host vehicle V has returned to the original travel lane (S103: YES), the display control unit 13 performs the processing of S105. When the host vehicle V has not returned to the original travel lane (S103: NO), the display control unit 13 determines whether or not a predetermined return time threshold has elapsed (S104).

When the predetermined return time threshold has not elapsed (S104: NO), the display control unit 13 performs the processing of S102. When the predetermined return time threshold has elapsed (S104: YES), the display control unit 13 returns the display form to the display form during normal times (S105). In the processing shown in FIG. 4, when the override operation by the driver is performed during control of display during exceptional times, the display control unit 13 returns to the control of display during normal times as described above.

As described above, for example, the host vehicle V may return to the original travel lane after deviating from the original travel lane in order to avoid an obstacle or the like. In this case, the display control device 100 moves the host vehicle icon VA relative to the lane marking image LA with the position of the lane marking image LA fixed in the display screen of the display 40 during the period from when the control of deviating from the original travel lane is started until when the host vehicle is returning to the original travel lane. That is, in this case, the host vehicle icon VA moves with the lane marking image LA as a reference. Here, in the display screen of the display 40, the lane marking image LA is displayed around the host vehicle icon VA and is displayed larger than the host vehicle icon VA. Therefore, this display control device 100 can curb the driver being attracted to the display 40 by fixing the lane marking image LA occupying a wide range in the display screen of the display 40 and moving the host vehicle icon VA smaller than the lane marking image LA. In this manner, when the host vehicle V deviates from the original travel lane and then returns to the original travel lane again, the display control device 100 can display the state of movement of the host vehicle V while suppressing attraction of the driver.

When moving the host vehicle icon VA in the display during exceptional times, the display control unit 13 moves the position of the host vehicle icon VA in the lane-width direction with the orientation fixed so that the host vehicle icon VA faces forward. In this case, since the display control device 100 does not change the orientation of the host vehicle icon VA, attraction of the driver to the display 40 can be further suppressed.

After performing the display during exceptional times, when the host vehicle V does not return to the original travel lane even after the predetermined return time threshold has elapsed, the display control unit 13 gradually moves the host vehicle icon VA to the reference position X in the display screen of the display 40, and then returns to the display during normal times. Here, for example, a schedule of returning to the original travel lane after the host vehicle V deviates from the original travel lane may be changed due to a change in a situation of other vehicles around the host vehicle V or the like. Therefore, when the host vehicle V does not return to the original travel lane even after the predetermined return time threshold has elapsed, the display control device 100 gradually moves the host vehicle icon VA to the reference position X in the display screen. Then, the display control device 100 performs the display during normal times in which the lane marking image LA is displayed relative to the host vehicle icon VA with the position of the host vehicle icon VA fixed in the display screen. Thereby, even when the travel schedule of the host vehicle V is changed, the display control device 100 can switch the control of display of the host vehicle icon VA and the lane marking image LA in accordance with the change in the travel schedule.

The above "return time threshold" is set to be shorter when the speed of the host vehicle V is fast than when the speed of the host vehicle V is slow. In this case, the display control device 100 can more appropriately switch the control of display of the host vehicle icon VA and the lane marking image LA according to the speed of the host vehicle V.

When the control of travel of the host vehicle V by the travel control unit 11 is canceled by the override operation of the driver of the host vehicle V, the display control unit 13 stops the control of the display during exceptional times and performs the control of the display during normal times. For example, when the control of travel of the host vehicle V by the travel control unit 11 is canceled by the override operation of the driver, an initial schedule of returning to the original travel lane after deviating from the original travel lane may be changed. Therefore, when the control by the travel control unit 11 is canceled, the display control device 100 stops the control (display during exceptional times) of moving the host vehicle icon VA relative to the lane marking image LA with the position of the lane marking image LA fixed, which had been performed assuming that the host vehicle V is returning to the original travel lane after deviating from the original travel lane. Thereby, the display control device 100 can switch the control of display of the host vehicle icon VA and the lane marking image LA in accordance with the change in the travel schedule.

The larger the steering angle of the steering operation that is the override operation of the driver deviates from the steering angle of the steering operation by the travel control unit 11, the earlier the display control unit 13 stops the control of the display during exceptional times. For example, in a state where the travel control unit 11 is performing control of travel of the host vehicle V, the larger the steering amount (steering angle) of the override operation performed by the driver becomes, the higher the possibility that the initial schedule of returning to the original travel lane after deviating from the original travel lane is changed is considered to be. Therefore, during control of travel by the travel control unit 11, the larger the steering amount of the override operation performed by the driver becomes, the earlier the display control device 100 stops the control (display during exceptional times) of moving the host vehicle icon VA relative to the lane marking image LA with the position of the lane marking image LA fixed, which had been performed assuming that the host vehicle V is returning to the original travel lane after deviating from the original travel lane. Thereby, the display control device 100 can switch the control of display of the host vehicle icon VA and the lane marking image LA while reflecting the intention of the driver.

## Claims

1. A display control device (100) configured to display, on a display (40), a lane marking image (LA) corresponding to a lane marking around a host vehicle and a host vehicle icon (VA) corresponding to the host vehicle (V), the display control device (100) comprising:
a travel control unit (11) configured to control travel of the host vehicle (V) based on an external environment and a preset travel route;
a determination unit (12) configured to determine, based on scheduled control information of travel of the host vehicle (V) according to the travel control unit (11), whether or not the host vehicle (V) is returning to an original travel lane after deviating from the original travel lane; and
a display control unit (13) configured to display the lane marking image (LA) and the host vehicle icon (VA) on the display (40) so as to correspond to a positional relationship between the lane marking and the host vehicle (V),
wherein when it is determined by the determination unit (12) that the host vehicle (V) is returning to the original travel lane after deviating from the original travel lane, the display control unit (13) moves the host vehicle icon (VA) relative to the lane marking image (LA) with a position of the lane marking image (LA) fixed in a display screen of the display (40) during a period from when control of deviating from the original travel lane is started until when the host vehicle (V) is returning to the original travel lane.

2. The display control device (100) according to claim 1, wherein when moving the host vehicle icon (VA), the display control unit (13) moves a position in a lane-width direction with an orientation fixed so that the host vehicle icon (VA) faces forward.

3. The display control device (100) according to claim 1 or 2, wherein when the host vehicle (V) does not return to the original travel lane even after a predetermined return time threshold has elapsed after moving the host vehicle icon (VA) relative to the lane marking image (LA) with the position of the lane marking image (LA) fixed in the display screen of the display (40), the display control unit (13) gradually moves the host vehicle icon (VA) to a reference position in the display screen, and then displays the lane marking image (LA) relative to the host vehicle (V) icon (VA) with a position of the host vehicle icon (VA) fixed in the display screen.

4. The display control device (100) according to claim 3, wherein the return time threshold is set to be shorter when a speed of the host vehicle (V) is fast than when the speed of the host vehicle (V) is slow.

5. The display control device (100) according to any one of claims 1 to 4, wherein when control of travel of the host vehicle (V) according to the travel control unit (11) is canceled by an override operation of a driver of the host vehicle (V), the display control unit (13) stops control of moving the host vehicle icon (VA) relative to the lane marking image (LA) with the position of the lane marking image (LA) fixed in the display screen of the display (40), and displays the lane marking image (LA) and the host vehicle icon (VA) on the display (40) so as to correspond to the positional relationship between the lane marking and the host vehicle (V).

6. The display control device (100) according to claim 5, wherein the display control unit (13)
stops the control of moving the host vehicle icon (VA) relative to the lane marking image (LA) with the position of the lane marking image (LA) fixed in the display screen of the display (40) earlier as a steering angle of a steering operation that is the override operation of the driver of the host vehicle (V) deviates more greatly from a steering angle of a steering operation by the travel control unit (11), and
displays the lane marking image (LA) and the host vehicle icon (VA) on the display (40) so as to correspond to the positional relationship between the lane marking and the host vehicle (V).
